# EUROPÄISCHE PATENTANMELDUNG

(11) **EP 4 571 554 A1**
(43) Veröffentlichungstag der Anmeldung: **18.06.2025**
(21) Anmeldenummer: 23216635.5
(22) Anmeldetag: 14.12.2023
(51) Int. Cl.: G06F 21/62, G06F 21/74, G06F 21/53, G06F 21/57

(54) **VERSCHLÜSSELTES CONTAINER-IMAGE FÜR EINE SICHERE AUSFÜHRUNGSUMGEBUNG**

(71) Anmelder: Siemens Aktiengesellschaft, 80333 München (DE)
(72) Erfinder: Seidler, Maximilian, 91052 Erlangen (DE); Labs, Torsten, 90478 Nürnberg (DE)
(74) Vertreter: Siemens Patent Attorneys

(57) **Zusammenfassung**

Die Erfindung betrifft ein Verfahren zum Bereitstellen eines verschlüsselten Container-Images (1), mit den Schritten:
- Ein Bereitstellen (S1) eines privaten Schlüssels eines asymmetrischen Schlüsselpaars,
- Ein Speichern (S2) des privaten Schlüssels in einem Speicherbereich, wobei eine sichere Ausführungsumgebung (2) einer Recheneinheit (6) über einen exklusiven Zugriff auf den Speicherbereich verfügt,
- das Bereitstellen (S4) des verschlüsselten Container-Images (1),
wobei das verschlüsselte Container-Image (1) durch den öffentlichen Schlüssel verschlüsselt ist (S3),
wobei das verschlüsselte Container-Image (1) durch den zugehörigen privaten Schlüssel entschlüsselbar ist (S7), wobei das entschlüsselte Container-Image (1b) in der sicheren Ausführungsumgebung der Recheneinheit ausführbar ist (S9), wodurch ein containerisiertes Anwendungsprogramm bereitgestellt wird,
wobei das containerisierte Anwendungsprogramm in der sicheren Ausführungsumgebung (3) der Recheneinheit (6) ausführbar ist (S10).

Außerdem betrifft die Erfindung ein zugehöriges Computerprogrammprodukt und computerlesbares Medium, sowie eine übergeordnete Recheneinheit, ein Gerät und ein System.

## Beschreibung

Unabhängig vom grammatikalischen Geschlecht eines bestimmten Begriffes sind Personen mit männlicher, weiblicher oder anderer Geschlechteridentität mit umfasst.

### HINTERGRUND DER ERFINDUNG

### Gebiet der Erfindung

Die vorliegende Erfindung betrifft ein Verfahren zum Bereitstellen eines verschlüsselten Container-Images. Außerdem betrifft die Erfindung ein zugehöriges Computerprogrammprodukt und computerlesbares Medium, sowie eine übergeordnete Recheneinheit, ein Gerät und ein System.

### Beschreibung des Stands der Technik

Um industrielle Produktionsabläufe effizienter zu gestalten, werden zunehmend komplexere und aufwändigere Datenverarbeitungsalgorithmen eingesetzt. Um eine damit verbundene Kommunikation und somit den entstehenden Energieaufwand, mögliche Zeitverzögerungen und/oder ein mögliches Verlust- und Fehlerrisiko so gering wie möglich zu halten, bewegt sich die Datenauswertung der durch die Datenverarbeitungsalgorithmen anfallenden Daten in Richtung der Datenquellen, also insbesondere in Richtung der ausführenden Produktion.

Softwareanbieter der Datenverarbeitungsalgorithmen stellt dies vor große Herausforderungen:
- Die Programmiersprachen der Datenverarbeitungsalgorithmen müssen für eingebettete (embedded) Geräte geeignet sein. Gewünscht wäre hingegen eine generelle Sprachunabhängigkeit für die Datenverarbeitungsalgorithmen.
- Die Datenverarbeitungsalgorithmen müssen auf bestimmte Endgeräte und -architekturen zugeschnitten sein. Gewünscht wäre hingegen eine Hardwareunabhängigkeit für die Datenverarbeitungsalgorithmen.
- Softwareanbieter müssen vertrauen, dass ihre Datenverarbeitungsalgorithmen nicht kopiert werden, sowohl vom Geräte- oder Systemhersteller als auch von Geräte- oder Systembetreibern vor Ort. Gewünscht wäre hingegen eine gewährte Vertraulichkeit für die Datenverarbeitungsalgorithmen.

Programme zu containerisieren und auf untrusted Computern auszuführen ist im Cloudumfeld unter den Stichworten "function-as-α-service" oder "serverless computing" bekannt.

Um benutzerdefinierte Software auf eingebetteten (embedded) Geräte zu betreiben, wird dieser Prozess oft ausgelagert. Softwareanbieter übernehmen die Integration von Algorithmen und liefern dedizierte Software, insbesondere für einen Chip.

Für programmierbare Logik werden von Herstellern außerdem oft eigene no-Code Ansätze angeboten, die das Programmieren von Mikrocontrollern mittels einer eigenen, oft grafikbasierten Sprache vereinfachen.

Die Aufgabe der Erfindung besteht darin, eine Lösung für eine verbesserte Bereitstellung von Softwareanwendungen bereitzustellen.

### ZUSAMMENFASSUNG DER ERFINDUNG

Die Erfindung ergibt sich aus den Merkmalen der unabhängigen Ansprüche. Vorteilhafte Weiterbildungen und Ausgestaltungen sind Gegenstand der abhängigen Ansprüche. Ausgestaltungen, Anwendungsmöglichkeiten und Vorteile der Erfindung ergeben sich aus der nachfolgenden Beschreibung und den Zeichnungen.

Die Erfindung betrifft ein Verfahren zum Bereitstellen eines verschlüsselten Container-Images, mit den Schritten:
- Ein Bereitstellen eines privaten Schlüssels eines asymmetrischen Schlüsselpaars,
   wobei dem asymmetrischen Schlüsselpaar außerdem (zusätzlich zu dem privaten Schlüssel) ein öffentlicher Schlüssel zugehörig ist,
- Ein Speichern des privaten Schlüssels in einem Speicherbereich, wobei eine sichere Ausführungsumgebung einer Recheneinheit über einen exklusiven Zugriff auf den Speicherbereich verfügt,
   wobei von einer unsicheren Ausführungsumgebung der Recheneinheit kein Zugriff auf die sichere Ausführungsumgebung der Recheneinheit möglich ist, und
- das Bereitstellen des verschlüsselten Container-Images, wobei das verschlüsselte Container-Image durch den öffentlichen Schlüssel verschlüsselt ist,
   wobei das verschlüsselte Container-Image durch den privaten Schlüssel entschlüsselbar ist, wodurch ein entschlüsseltes Container-Image bereitgestellt wird,
   wobei das entschlüsselte Container-Image in der sicheren Ausführungsumgebung der Recheneinheit ausführbar ist, wodurch ein containerisiertes Anwendungsprogramm bereitgestellt wird,
   wobei das entschlüsselte Container-Image in einer unsicheren Ausführungsumgebung nicht ausführbar ist,
   wobei das containerisierte Anwendungsprogramm in der sicheren Ausführungsumgebung der Recheneinheit ausführbar ist.

Die Erfindung stellt ein Verfahren bereit, den mit dem Stand der Technik genannten Anforderungen der Sprach- und Hardwareunabhängigkeit sowie der Vertraulichkeit zu begegnen. Das erfindungsgemäße ermöglicht es Softwareanbietern, Softwareanwendungen in verschlüsselten Containern zur Verfügung zu stellen. Diese können von Systembetreibern in Empfang genommen und verschlüsselt, vorerst in einer unsicheren Ausführungsumgebung, gespeichert werden. Die Container werden zur Ausführungszeit in einem sicheren Bereich entschlüsselt und dort ausgeführt. Softwareanbieter können somit darauf vertrauen, dass ihre Softwareanwendungen vor unerlaubten Kopie geschützt sind, sowohl dem System- und Gerätehersteller als auch dem Systembetreiber vor Ort gegenüber.

Durch die erfindungsgemäße Containerisierung werden Softwareanwendungen/Programme als ausführbare Container ausgeliefert. Diese bieten meist Sprachunabhängigkeit. Die Hardwareunabhängigkeit wird durch die Container-Runtime gekapselt. Mögliche Realisierungen sind insbesondere WebAssembly.

Die Speicherbereiche der Recheneinheit, insbesondere des Mikrocontrollers, werden in einen sicheren und einen unsicheren Bereich (Ausführungsumgebung) unterteilt, wobei das Betriebssystem und alle Routinen im unsicheren Bereich operieren und die erfindungsgemäße Lösung eine Speicherisolation bereitstellt.

Die sichere Ausführungsumgebung der Recheneinheit stellt eine sichere und vertrauenswürdige Laufzeitumgebung für Applikationen und Anwendungen zur Verfügung. Dabei kann die sichere Ausführungsumgebung isoliert auf einem separaten Prozessor, direkt auf dem Hauptprozessor(en) eines Computersystems, einer Hardwareunterstützung oder aber in einem Multiprozessor-Systems bzw. eines Ein-Chip-Systems (SoC) existieren. In der sicheren Ausführungsumgebung können nur speziell dafür freigeschaltete Applikationen ausgeführt werden.

Ein Zugriff in den sicheren Bereich aus dem unsicheren Bereich ist nicht möglich. Die Ausnahme bilden nur eine (stark) begrenzte Anzahl an spezialisierten API-Calls. Eine verwendbare Implementierung besteht in sicheren Ausführungsumgebungen, insbesondere in Trusted Execution Environments, z.B. ARM TrustZone oder IntelSGX.

Das Speichern des privaten Schlüssels erfolgt in einem Speicherbereich, wobei die sichere Ausführungsumgebung der Recheneinheit über einen exklusiven Zugriff auf den Speicherbereich verfügt. Der exklusive Zugriff bedeutet, dass nur und ausschließlich aus einer sicheren Ausführungsumgebung ein Zugriff auf den Speicherbereich möglich ist. Von anderen Bereichen ist kein Zugriff auf den Speicherbereich möglich.

Anwendungen von Softwareanbietern werden als hardwareunabhängige Container bereitgestellt. Diese können komplexe und durch kostspielige Entwicklung ausgearbeitete Algorithmen sein. Um Urheberrechte zu schützen, sind die Container verschlüsselt. Ein System, auf dem das Container-Image ausgeführt werden soll, insbesondere ein Mikrocontrollersystem, wird über einen Remote-Zugriffe dazu angewiesen, das Container-Image zu laden. Wird ein Befehl zum Laden gegeben, wird der verschlüsselte Container im unsicheren Bereich im nicht-volatilen Speicher gespeichert. Durch die Verschlüsselung ist ein Öffnen ohne Schlüssel nicht möglich.

Soll das System, insbesondere der Mikrocontroller, anschließend Anwendungen des Container-Images ausführen, wird das verschlüsselte Container-Image über eine privilegierte Anweisung in den sicheren Bereich gespeichert.

Im sicheren Speicher befindet sich der private Schlüssel des Schlüsselpaars, der verwendet wird, um den mit dem öffentlichen Schlüssel verschlüsselten Container zu entschlüsseln.

Der entschlüsselte Code wird ausschließlich im sicheren Bereich des Mikrocontrollers, insbesondere temporär während der Ausführung, gespeichert um ein externes Auslesen von Angreifern vor Ort, aber auch vom Gerätehersteller zu verhindern.

Das entschlüsselte Container-Image ist ausschließlich in einer sicheren Ausführungsumgebung der Recheneinheit ausführbar. Dies bedeutet, dass das entschlüsselte Container-Image in keiner andere Umgebung als einer sicheren Ausführungsumgebung ausführbar ist. Das entschlüsselte Container-Image ist in einer unsicheren Ausführungsumgebung nicht ausführbar.

Der ausführbare Code wird von der Container-Runtime ebenfalls im sicheren Speicherbereich ausgeführt. Somit sind auch temporäre Daten und Laufzeitdaten nicht von außen zu beobachten.

Die Erfindung bietet den Vorteil, dass ein Verkauf von Software und Hardware entkoppelt wird. Dies ermöglicht SoftwareAnbietern, den reinen Verkauf von Analyse- und Auswertungsalgorithmen.

Die Schritte des erfindungsgemäßen Verfahrens werden bevorzugt von dem Anbieter des verschlüsselten Container-Images und damit dem Anbieter des containerisierte Anwendungsprogramms ausgeführt.

Die Schritte der Weiterbildung des erfindungsgemäßen Verfahrens werden entweder von dem Anbieter des verschlüsselten Container-Images und damit dem Anbieter des containerisierte Anwendungsprogramms ausgeführt und/oder von dessen Kunden, insbesondere einem Betreiber einer Anlage.

In einer Weiterbildung der Erfindung weist das erfindungsgemäße Verfahren den weiteren Schritt auf:
- Ein Verschlüsseln eines Container-Images durch den öffentlichen Schlüssel, wodurch das verschlüsselte Container-Image erzeugt wird.

Der Schritt dieser Weiterbildung wird bevorzugt von dem Anbieter des verschlüsselten Container-Images und damit dem Anbieter des containerisierte Anwendungsprogramms ausgeführt.

In einer Weiterbildung der Erfindung weist das erfindungsgemäße Verfahren den weiteren Schritt auf:
- Ein Laden des verschlüsselten Container-Images in die unsichere Ausführungsumgebung der Recheneinheit.

Der Schritt dieser Weiterbildung wird insbesondere von dem Anbieter des verschlüsselten Container-Images und damit dem Anbieter des containerisierte Anwendungsprogramms initiiert und/oder von dessen Kunden, insbesondere einem Betreiber einer Anlage.

In einer Weiterbildung der Erfindung weist das erfindungsgemäße Verfahren die weiteren Schritte auf:
- Ein Laden des verschlüsselten Container-Images von der unsicheren Ausführungsumgebung der Recheneinheit in die sichere Ausführungsumgebung der Recheneinheit, und
- ein Speichern des verschlüsselten Container-Images in der sicheren Ausführungsumgebung der Recheneinheit.

Die Schritte dieser Weiterbildung werden entweder von dem Anbieter des verschlüsselten Container-Images und damit dem Anbieter des containerisierte Anwendungsprogramms initiiert und/oder von dessen Kunden, insbesondere einem Betreiber einer Anlage.

In einer Weiterbildung der Erfindung weist das erfindungsgemäße Verfahren die weiteren Schritte auf:
- Ein Entschlüsseln des verschlüsselten Container-Images durch den privaten Schlüssel in der sicheren Ausführungsumgebung der Recheneinheit, und
- ein Bereitstellen des entschlüsselten Container-Images in der sicheren Ausführungsumgebung der Recheneinheit.

Die Schritte dieser Weiterbildung werden entweder durch den Anbieter des verschlüsselten Container-Images und damit dem Anbieter des containerisierte Anwendungsprogramms initiiert und/oder bevorzugt durch dessen Kunden, insbesondere einem Betreiber einer Anlage.

In einer Weiterbildung der Erfindung weist das erfindungsgemäße Verfahren die weiteren Schritte auf:
- Ein Ausführen des entschlüsselten Container-Images in einer Container-Laufzeitumgebung der sicheren Ausführungsumgebung der Recheneinheit, und dadurch:
- Ein Bereitstellen des containerisierten Anwendungsprogramms.

Die Schritte dieser Weiterbildung werden entweder von dem Anbieter des verschlüsselten Container-Images und damit dem Anbieter des containerisierte Anwendungsprogramms initiiert und/oder bevorzugt von dessen Kunden, insbesondere einem Betreiber einer Anlage.

In einer Weiterbildung der Erfindung weist das erfindungsgemäße Verfahren den weiteren Schritt auf:
- Ein Ausführen des containerisierten Anwendungsprogramms in der sicheren Ausführungsumgebung der Recheneinheit.

Die Schritte dieser Weiterbildung werden bevorzugt von dem Kunden, insbesondere einem Betreiber einer Anlage, des Anbieters des verschlüsselten Container-Images und damit des Anbieters des containerisierte Anwendungsprogramms, initiiert.

In einer Weiterbildung der Erfindung weist das erfindungsgemäße Verfahren den weiteren Schritt auf:
- Ein Empfangen einer Attestierung des entschlüsselten Container-Images und/oder des containerisierten Anwendungsprogramms aus der sicheren Ausführungsumgebung der Recheneinheit.

Der Schritt dieser Weiterbildung wird bevorzugt von dem Anbieter des verschlüsselten Container-Images und damit dem Anbieter des containerisierte Anwendungsprogramms initiiert.

Die Attestierung wird nach dieser Ausführungsform remote, d.h. außerhalb der Recheneinheit empfangen. Remote Attestation erlaubt es externen Parteien nachzuvollziehen, ob das Container-Images oder der enthaltene Code verändert wurde. Die Attestierung stammt von der verwendeten Trusted Execution Environment, und wird vom Hardwarehersteller insbesondere an den Anbieter des Container-Images bereitgestellt.

Die im sicheren Speicherbereich verwendete Software (entschlüsselter Code) und Container-Runtime sind durch diese Ausführungsform aus der Ferne (remote) durch die Attestierung überprüfbar.

In einer Weiterbildung der Erfindung weist das erfindungsgemäße Verfahren den weiteren Schritt auf:
- ein Prüfen der Attestierung des entschlüsselten Container-Images und/oder des containerisierten Anwendungsprogramms.

Der Schritt dieser Weiterbildung wird bevorzugt von dem Anbieter des verschlüsselten Container-Images und damit dem Anbieter des containerisierte Anwendungsprogramms initiiert.

Da die vollständige Entschlüsselung nur in der sicheren Ausführungsumgebung stattfindet und deren Software von außen attestierbar (als auch vom Anbieter des Container-Image) ist, kann ein Softwareanbieter selbst nachprüfen, ob sein Produkt einsehbar oder weiterhin geschützt ist.

In einer weiteren Weiterbildung der Erfindung ist die sichere Ausführungsumgebung ausgebildet als:
- Eine Trusted Execution Environment und/oder
- eine Enklave.

Die Erfindung umfasst außerdem ein Computerprogrammprodukt, umfassend ein Computerprogramm, wobei das Computerprogramm in eine Speichereinrichtung einer Recheneinheit ladbar ist, wobei mit dem Computerprogramm die Schritte eines erfindungsgemäßen Verfahrens ausgeführt werden, wenn das Computerprogramm auf der Recheneinheit ausgeführt wird.

Die Erfindung umfasst außerdem ein computerlesbares Medium, auf welchem ein Computerprogramm gespeichert ist, wobei das Computerprogramm in eine Speichereinrichtung einer Recheneinheit ladbar ist, wobei mit dem Computerprogramm die Schritte eines erfindungsgemäßen Verfahrens ausgeführt werden, wenn das Computerprogramm auf der Recheneinheit ausgeführt wird.

Die Erfindung umfasst außerdem eine Recheneinheit aufweisend ein erfindungsgemäßes Computerprogrammprodukt und/oder ein erfindungsgemäßes computerlesbares Medium,
wobei die Recheneinheit ausgebildet ist, das Computerprogramm auszuführen,
wobei die Recheneinheit insbesondere ausgebildet ist, auf:
   - Einem Computerchip und/oder
   - einem Mikrochip.

Die Erfindung umfasst außerdem ein Gerät aufweisend eine erfindungsgemäße Recheneinheit,
insbesondere als:
- Ein eingebettetes Gerät und/oder
- ein Internet-of-Things-Gerät und/oder
- ein Mikrocontroller und/oder
- ein Sensorsystem.

Die Erfindung umfasst außerdem ein System aufweisend mindestens ein erfindungsgemäßes Gerät,
insbesondere ausgebildet als:
- Ein Internet-of-Things-System und/oder
- eine industrielle Anlage, und/oder
- eine Produktionsanlage, und/oder
- ein Gebäudekomplex, und/oder
- ein Energienetz, und/oder
- ein Fahrzeug, und/oder
- ein Transportmittel, und/oder
- ein Kraftwerk, und/oder
- ein Energieerzeugungssystem, und/oder
- ein medizintechnisches System, und/oder
- ein bildgebendes medizinisches System.

### KURZE BESCHREIBUNG DER ZEICHNUNGEN

Die Besonderheiten und Vorteile der Erfindung werden aus den nachfolgenden Erläuterungen mehrerer Ausführungsbeispiele anhand der schematischen Zeichnungen ersichtlich.

Es zeigen
- Fig. 1: ein Ablaufdiagramm des erfindungsgemäßen Verfahrens, und
- Fig. 2: eine schematische Darstellung einer erfindungsgemäße Recheneinheit.

### DETAILLIERTE BESCHREIBUNG DER ERFINDUNG

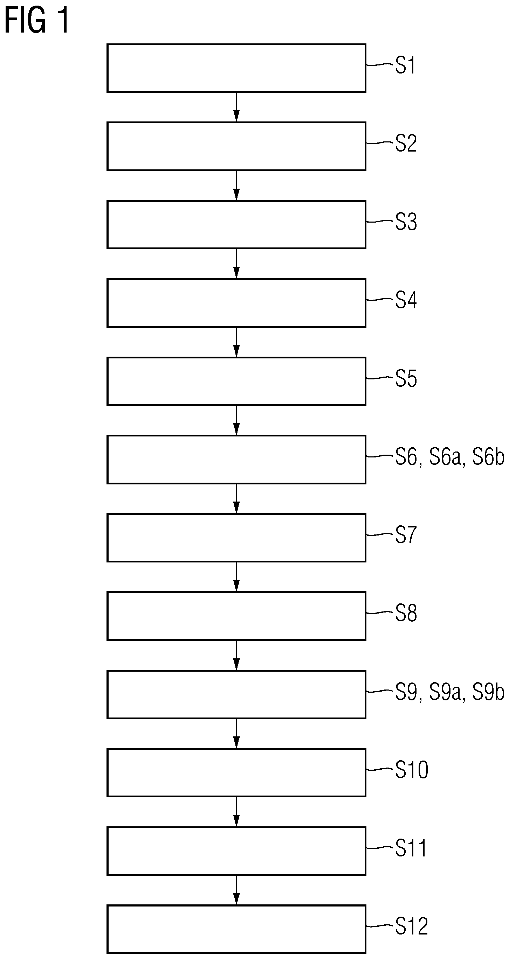

Fig. 1 zeigt ein Ablaufdiagramm des erfindungsgemäßen Verfahrens zum Bereitstellen eines verschlüsselten Container-Images, mit den Schritten:
- Schritt S1: Ein Bereitstellen eines privaten Schlüssels eines asymmetrischen Schlüsselpaars,
   wobei dem asymmetrischen Schlüsselpaar außerdem ein öffentlicher Schlüssel zugehörig ist,
- Schritt S2: Ein Speichern des privaten Schlüssels in einem Speicherbereich, wobei eine sichere Ausführungsumgebung einer Recheneinheit über einen exklusiven Zugriff auf den Speicherbereich verfügt,
   wobei von einer unsicheren Ausführungsumgebung der Recheneinheit kein Zugriff auf die sichere Ausführungsumgebung der Recheneinheit möglich ist,
- Schritt S3: Optional: Ein Verschlüsseln eines Container-Images durch den öffentlichen Schlüssel, wodurch das verschlüsselte Container-Image erzeugt wird,
- Schritt S4: Das Bereitstellen des verschlüsselten Container-Images,
   wobei das verschlüsselte Container-Image durch den öffentlichen Schlüssel verschlüsselt ist (S3),
   wobei das verschlüsselte Container-Image durch den privaten Schlüssel entschlüsselbar ist (S7), wodurch ein entschlüsseltes Container-Image bereitgestellt wird (S8),
   wobei das entschlüsselte Container-Image in der sicheren Ausführungsumgebung der Recheneinheit ausführbar ist (S9), wodurch ein containerisiertes Anwendungsprogramm bereitgestellt wird,
   wobei das entschlüsselte Container-Image in einer unsicheren Ausführungsumgebung nicht ausführbar ist,
   wobei das containerisierte Anwendungsprogramm in der sicheren Ausführungsumgebung der Recheneinheit ausführbar ist (S10),
mit dem weiteren optionalen Schritten:
- Schritt S5: Ein Laden des verschlüsselten Container-Images in die unsichere Ausführungsumgebung der Recheneinheit,
- Schritt S6a: Ein Laden des verschlüsselten Container-Images von der unsicheren Ausführungsumgebung der Recheneinheit in die sichere Ausführungsumgebung der Recheneinheit,
- Schritt S6b: Ein Speichern (S6b) des verschlüsselten Container-Images in der sicheren Ausführungsumgebung der Recheneinheit,
- Schritt S7: Ein Entschlüsseln des verschlüsselten Container-Images durch den privaten Schlüssel in der sicheren Ausführungsumgebung der Recheneinheit,
- Schritt S8: Ein Bereitstellen des entschlüsselten Container-Images in der sicheren Ausführungsumgebung der Recheneinheit,
- Schritt S9a: Ein Ausführen des entschlüsselten Container-Images in einer Container-Laufzeitumgebung der sicheren Ausführungsumgebung der Recheneinheit,
- Schritt S9b: Ein Bereitstellen des containerisierten Anwendungsprogramms,
- Schritt S10: Ein Ausführen des containerisierten Anwendungsprogramms in der sicheren Ausführungsumgebung der Recheneinheit,
- Schritt S11: Ein Empfangen einer Attestierung des entschlüsselten Container-Images und/oder des containerisierten Anwendungsprogramms aus der sicheren Ausführungsumgebung der Recheneinheit, und
- Schritt S12: Ein Prüfen der Attestierung des entschlüsselten Container-Images und/oder des containerisierten Anwendungsprogramms.

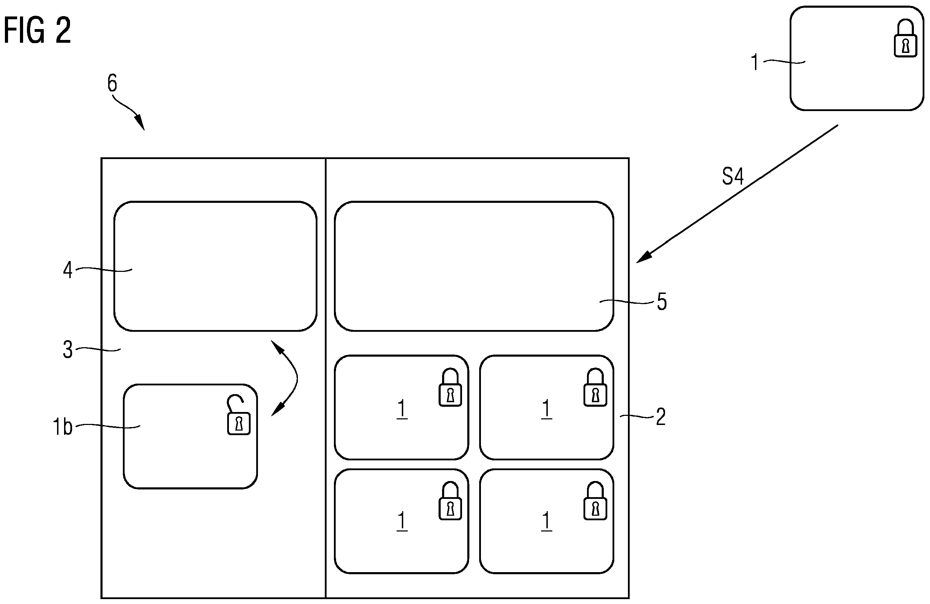

Fig. 2 zeigt:
- Eine erfindungsgemäße Recheneinheit 6, insbesondere auf einem Microcontroller (nicht dargestellt), aufweisend:
   o eine sichere Ausführungsumgebung 3, aufweisend:
      ▪ eine Container-Laufzeitumgebung 4, und
      ▪ ein geladenes und entschlüsseltes Container-Image 1b,
      und
   o eine unsichere Ausführungsumgebung 2, aufweisend:
      ▪ ein Betriebssystem 5, und
      ▪ verschlüsselte Container-Images 1.
   wobei die Recheneinheit 6 ausgebildet ist, das erfindungsgemäße Verfahren zum Bereitstellen S4 des verschlüsselten Container-Images 1, dargestellt in Fig. 1, auszuführen.
Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

## Patentansprüche

1. Verfahren zum Bereitstellen eines verschlüsselten Container-Images (1), mit den Schritten:
- Ein Bereitstellen (S1) eines privaten Schlüssels eines asymmetrischen Schlüsselpaars,
wobei dem asymmetrischen Schlüsselpaar außerdem ein öffentlicher Schlüssel zugehörig ist,
- Ein Speichern (S2) des privaten Schlüssels in einem Speicherbereich, wobei eine sichere Ausführungsumgebung (2) einer Recheneinheit (6) über einen exklusiven Zugriff auf den Speicherbereich verfügt,
wobei von einer unsicheren Ausführungsumgebung (2) der Recheneinheit (6) kein Zugriff auf die sichere Ausführungsumgebung (3) der Recheneinheit (6) möglich ist, und
- das Bereitstellen (S4) des verschlüsselten Container-Images (1),
wobei das verschlüsselte Container-Image (1) durch den öffentlichen Schlüssel verschlüsselt ist (S3),
wobei das verschlüsselte Container-Image (1) durch den privaten Schlüssel entschlüsselbar ist (S7), wodurch ein entschlüsseltes Container-Image (3) bereitgestellt wird (S8),
wobei das entschlüsselte Container-Image (1b) in der sicheren Ausführungsumgebung der Recheneinheit ausführbar ist (S9), wodurch ein containerisiertes Anwendungsprogramm bereitgestellt wird,
wobei das entschlüsselte Container-Image in einer unsicheren Ausführungsumgebung nicht ausführbar ist,
wobei das containerisierte Anwendungsprogramm in der sicheren Ausführungsumgebung (3) der Recheneinheit (6) ausführbar ist (S10).

2. Verfahren nach Anspruch 1,
mit dem weiteren Schritt:
- Ein Verschlüsseln (S3) eines Container-Images durch den öffentlichen Schlüssel, wodurch das verschlüsselte Container-Image (1) erzeugt wird.

3. Verfahren nach einem der vorhergehenden Ansprüche,
mit dem weiteren Schritt:
- Ein Laden (S5) des verschlüsselten Container-Images (1) in die unsichere Ausführungsumgebung (2) der Recheneinheit (6).

4. Verfahren nach einem der vorhergehenden Ansprüche,
mit den weiteren Schritten:
- Ein Laden (S6a) des verschlüsselten Container-Images (1) von der unsicheren Ausführungsumgebung (2) der Recheneinheit (6) in die sichere Ausführungsumgebung (3) der Recheneinheit (6), und
- ein Speichern (S6b) des verschlüsselten Container-Images (1) in der sicheren Ausführungsumgebung (3) der Recheneinheit (6).

5. Verfahren nach einem der vorhergehenden Ansprüche,
mit den weiteren Schritten:
- Ein Entschlüsseln (S7) des verschlüsselten Container-Images (1) durch den privaten Schlüssel in der sicheren Ausführungsumgebung (3) der Recheneinheit (6), und
- ein Bereitstellen (S8) des entschlüsselten Container-Images (1b) in der sicheren Ausführungsumgebung (3) der Recheneinheit (6).

6. Verfahren nach einem der vorhergehenden Ansprüche,
mit den weiteren Schritten:
- Ein Ausführen (S9a) des entschlüsselten Container-Images (1b) in einer Container-Laufzeitumgebung (4) der sicheren Ausführungsumgebung (3) der Recheneinheit, und dadurch:
- Ein Bereitstellen (S9b) des containerisierten Anwendungsprogramms.

7. Verfahren nach einem der vorhergehenden Ansprüche,
mit dem weiteren Schritt:
- Ein Ausführen (S10) des containerisierten Anwendungsprogramms in der sicheren Ausführungsumgebung (3) der Recheneinheit (6).

8. Verfahren nach einem der vorhergehenden Ansprüche,
mit dem weiteren Schritt:
- Ein Empfangen (S11) einer Attestierung des entschlüsselten Container-Images (1b) und/oder des containerisierten Anwendungsprogramms aus der sicheren Ausführungsumgebung (3) der Recheneinheit (6).

9. Verfahren nach Anspruch 8,
- ein Prüfen (S12) der Attestierung des entschlüsselten Container-Images (1b) und/oder des containerisierten Anwendungsprogramms.

10. Verfahren nach einem der vorhergehenden Ansprüche,
wobei die sichere Ausführungsumgebung (3) ausgebildet ist als:
- Eine Trusted Execution Environment (3) und/oder
- eine Enklave (3).

11. Computerprogrammprodukt, umfassend ein Computerprogramm, insbesondere ein Container-Image, wobei das Computerprogramm in eine Speichereinrichtung einer Recheneinheit (6) ladbar ist, wobei mit dem Computerprogramm die Schritte eines Verfahrens nach einem der Ansprüche 1 bis 10 ausgeführt werden, wenn das Computerprogramm auf der Recheneinheit (6) ausgeführt wird.

12. Computerlesbares Medium, auf welchem ein Computerprogramm, insbesondere ein Container-Image, gespeichert ist, wobei das Computerprogramm in eine Speichereinrichtung einer Recheneinheit (6) ladbar ist, wobei mit dem Computerprogramm die Schritte eines Verfahrens nach einem der Ansprüche 1 bis 10 ausgeführt werden, wenn das Computerprogramm auf der Recheneinheit (6) ausgeführt wird.

13. Recheneinheit (6) aufweisend ein Computerprogrammprodukt nach Anspruch 11 und/oder ein computerlesbares Medium nach Anspruch 12,
wobei die Recheneinheit (6) ausgebildet ist, das Computerprogramm auszuführen.

14. Gerät aufweisend eine Recheneinheit nach Anspruch 13, insbesondere als:
- Ein eingebettetes Gerät und/oder
- ein Internet-of-Things-Gerät und/oder
- ein Mikrocontroller und/oder
- ein Sensorsystem,
insbesondere die Recheneinheit (6) aufweisend auf:
- Einem Computerchip und/oder
- einem Mikrochip.

15. System aufweisend mindestens ein Gerät nach Anspruch 14, insbesondere ausgebildet als:
- Ein Internet-of-Things-System und/oder
- eine industrielle Anlage, und/oder
- eine Produktionsanlage, und/oder
- ein Gebäudekomplex, und/oder
- ein Energienetz, und/oder
- ein Fahrzeug, und/oder
- ein Transportmittel, und/oder
- ein Kraftwerk, und/oder
- ein Energieerzeugungssystem, und/oder
- ein medizintechnisches System, und/oder
- ein bildgebendes medizinisches System.
